# EUROPEAN PATENT SPECIFICATION

(11) **EP 3 526 656 B1**
(45) Date of publication and mention of the grant of the patent: **16.08.2023**
(21) Application number: 16917597.3
(22) Date of filing: 02.10.2016
(51) Int. Cl.: G06F 3/00, G06F 3/0354, G06F 3/0362

(54) **A FINGER ACTIVATED MOUSE DEVICE/SWITCHING DEVICE**
FINGERAKTIVIERTE MAUSVORRICHTUNG/SCHALTVORRICHTUNG
DISPOSITIF DE SOURIS/DISPOSITIF DE COMMUTATION ACTIVÉ PAR UN DOIGT

(30) Priority: 29.09.2016 US 201615280029
(43) Date of publication of application: 21.08.2019
(73) Proprietor: Wu, Qiankun, Moreno Valley, California 92553 (US)
(72) Inventor: Wu, Qiankun, Moreno Valley, California 92553 (US)
(74) Representative: McQueen, Andrew Peter
(86) International application number: PCT/IB2016/055893
(87) International publication number: WO 2018/060760

(56) References cited:
- US-A1- 2005 264 533
- US-A1- 2009 146 955
- US-A1- 2010 060 607
- US-A1- 2011 279 371
- US-A1- 2012 293 414
- US-A1- 2014 078 062

## Description

### BACKGROUND

### Technical field

The present invention is particularly related to a finger activated mouse/ switching device that is activated using proximal phalanx as defined by the appended set of claims.

### Description of the Related Art

In computing, a mouse is a pointing device that detects two-dimensional motion relative to a surface. This motion is typically translated into the motion of a pointer visible on a computer display, which allows for fine control of a graphical user interface. Physically, a mouse consists of an enclosure held in one's hand on the surface, and has one or more buttons, which is pressed by the fingers of the hand holding the mouse. Mice often feature other elements, such as touch surfaces and scroll wheels to provide additional control and dimensional input. Mouse buttons are usually micro switches, which are pressed to interact with an element of a graphical user interface, and produce a distinctive clicking sound. In a typical use scenario, after the pointer is positioned on screen by moving the mouse on the surface, a mouse button is pressed downwardly in a quick motion to enable a software enablement to invoke an expected computer action or result. Alternately, the button is pressed downwardly twice (or even three times) in quick succession to invoke an expected software driven response. In a still further embodiment of the traditional mouse, a button is pressed down and held down until an expected time related response is achieved. The three-button scroll mouse has become the most commonly available design.

The existing mouse generates a carpal-tunnel effect or syndrome on the users because the user tend to click the mouse with the tip of their fingers, thereby causing the fingers to bend. The existing designs of mouse cause pain in the palm since fingers need to be bent. Further, the existing mouse includes a rounded/elevated portion closer to the wrist side of the palm. The rounded/elevated portion in the existing mouse designs causes the muscles to restrain.

US 2012/0293414 A1 discloses such a conventional computer mouse.

Hence, there exists a need for a mouse that eliminates pain caused in the fingers due to carpal-tunnel effect or syndrome. Furthermore, there exists need for a mouse that eliminates the rounded/elevated portion to prevent muscle strain. Still further, there exists a need for a finger-activated mouse that is operated with a back press operation using the finger areas other than the fingertips. Yet there exists a need for a finger-activated mouse that facilitates natural clicking operation.

The above-mentioned shortcomings, disadvantages and problems are addressed herein, which will be understood by reading and studying the following specification.

### OBJECTS OF THE EMBODIMENTS

The primary object of the embodiments herein is to provide a finger-activated computer mouse/switching device operated by proximal phalanx of a finger.

Another object of the embodiments herein is to provide a finger activated switching device/mouse ergonomically designed to prevent carpal-tunnel effect or syndrome and bending of fingers.

Yet another object of the embodiments herein is to provide a finger-activated computer mouse/switching device that is operated with a back press operation using the finger areas other than the fingertips.

Yet another object of the embodiments herein is to provide a finger-activated computer mouse/switching device provided with upper levers/elongated buttons, switching elements, and restoring elements.

Yet another object of the embodiments herein is to provide a finger-activated computer mouse/switching device provided with upper levers/elongated buttons which are elevated surfaces so that the fingers rest in a relaxed position(s) on them.

These and other objects and advantages of the embodiments herein will become readily apparent from the following detailed description taken in conjunction with the accompanying drawings.

### SUMMARY

The various embodiments herein disclose a switching device/mouse activated by proximal phalanx of a finger. The switching device/mouse is ergonomically designed to prevent carpal-tunnel effect and bending of fingers. The embodiments herein discloses a mouse/ switching device including upper levers/elongated buttons with an elevated surface so that the user rests his fingers in a relaxed position on the elevated surfaces. The upper levers/elongated buttons includes elongated and elevated parts that go down when pressed anywhere on the elevated surfaces. Further, the mouse is back pressed with the proximal phalanx of the fingers without bending the fingers.

According to an embodiment herein, a finger activated mouse device/switching device is provided. The device comprises an enclosure having a top wall, a bottom wall, and a pair of opposing side walls. The upper levers/elongated buttons is pivotally supported on the top wall. The upper levers/elongated buttons is downwardly displaced from the top wall with a proximal phalanx of the finger. The upper levers/elongated buttons are attached to the top wall through support arms. A pair of restoring elements are positioned within the enclosure. The pair of restoring elements includes a first restoring element and a second restoring element. The first restoring element and the second restoring element is connected to the upper levers/elongated buttons. The first restoring element and the second restoring element are respectively configured to displace the upper levers/elongated buttons back to a home position or rest position after the completion of the displacement operation of the upper levers/elongated buttons. A pair of switching elements are positioned within the enclosure. The pair of switching elements include a first switching element and a second switching element. The first switching element and the second switching element is connected to the upper levers/elongated buttons. The first switching element and the second switching element are respectively activated, when the upper levers/elongated buttons is displaced downwardly. The upper levers/elongated buttons has an elevated surface to receive fingers of the user during a use condition. The upper levers/elongated buttons is configured to be operated with a proximal phalanx of the fingers.

According to an embodiment herein, the first switching element and the second switching element are respectively deactivated, when the upper levers/elongated buttons is moved to home position or rest position.

According to an embodiment herein, the first switching element and the second switching element are respectively activated to close an electrical circuit.

According to an embodiment herein, the first switching element and the second switching element are respectively deactivated to open an electrical circuit.

According to an embodiment herein, the first switching element and the second switching element are similar or of same type.

According to an embodiment herein, the first switching element and the second switching element are of different types.

According to an embodiment herein, the first rotating element and the second rotating element are springs.

According to an embodiment herein, the first rotating element and the second rotating element are fiber material.

According to an embodiment herein, the device further comprises a platform supported by a spring. The platform is tilted in a first direction to activate the first switching element and the second switching, when the upper levers/elongated buttons is displaced downwardly. According to an embodiment herein, the platform is connected to the first switching element through a first rod. The platform is connected to the second switching element through a second rod.

According to an embodiment herein, the first switching element is enclosed in a first block mounted on the bottom wall of the enclosure, and the second switching element is enclosed in a second block mounted on the bottom wall of the enclosure.

According to an embodiment herein, the device further comprises a scroll wheel attached in between the upper levers/elevated buttons/elongated buttons.

According to an embodiment herein, the upper levers/elongated buttons has two arms separated by a distance. The two arms includes a first arm and a second arm. The first arm and the second arm are displaced to carry out mutually different operations.

According to an embodiment herein, the upper wall is mounted with an illuminating unit to provide illumination or light during operation.

According to an embodiment herein, a switching device/mouse activated by proximal phalanx of a finger includes an enclosure having a top wall, a bottom wall, and sidewalls. The switching device/mouse includes upper levers/elongated buttons pivotally supported by the top wall. The upper levers/elongated buttons is downwardly displaced from the top wall with a proximal phalanx of the finger. The switching device/mouse includes a pair of restoring elements positioned within the enclosure and coupled to the upper levers/elongated buttons to reposition the upper levers/elongated buttons back to the rest position or home position, when the movement of the upper levers/elongated buttons is completed. Further, the switching device/mouse includes a pair of switching elements wherein the operation of the switching elements is carried out by the displacement of the upper levers/elongated buttons to perform an electrical switching operation. The mouse is held in the grasping grip such that a user's hand is in a positioned over the top wall during a rest position, and the user's finger is positioned on the elevated surface of the upper levers/elongated buttons during an operation of the upper levers/elongated buttons. The upper levers/elongated buttons is operated by back pressing operation with the proximal phalanx of the fingers without bending the fingers.

According to an embodiment herein, the switching device/mouse further includes a platform supported by a pivotable element. When the upper levers/elongated buttons is displaced downwardly, the pivotable element is tilted in a first direction for actuating a first switching element. The restoring elements are any one of springs, and material fibers.

According to an embodiment herein, an ergonomically designed computer mouse device activated by proximal phalanx of a finger includes an enclosure having a top wall, a bottom wall, and sidewalls. The computer mouse includes an upper levers/elongated buttons pivotally supported by the top wall. The upper levers/elongated buttons includes an elevated surface continuing to a contoured curve at the edge so that fingers rest in a relaxed position on the elevated surface. The upper level is displaced by pressing the curved edge with the proximal phalanx of the fingers. The computer mouse includes a scroll wheel positioned above the top wall. The mouse is held in the grasping grip such that a user's hand is in a received to rest over the top wall during a non-use condition. The device is operated by back pressing the upper levers/elongated buttons with the proximal phalanx of the fingers without having to bend the fingers.

According to an embodiment herein, a switching device/mouse activated by proximal phalanx of a finger includes an enclosure having a top wall and a bottom wall. The switching device/mouse includes a plurality of upper levers/elongated buttons arranged adjacent to one another. The upper levers/elongated buttons are pivotally supported by the top wall and spaced apart from the top wall during a non-use condition. The upper levers/elongated buttons is downwardly displaced with the proximal phalanx of the finger. The switching device/mouse includes a plurality of restoring elements positioned within the enclosure and coupled to the upper levers/elongated buttons to reposition the upper levers/elongated buttons back to home position or rest position, after the completion of displacement operation of the upper levers/elongated buttons. The restoring elements includes any one of springs of fiber materials. The switching device/mouse includes a plurality of switching elements. The upper levers/elongated buttons is displaced to activate the switching elements to carry out an electrical switching operation. The mouse is held in the grasping condition such that a user's hand is positioned over the top wall during a non-use condition. The user's finger is positioned on the elevated surface of the upper levers/elongated buttons to operate the upper levers/ elongated buttons by a back pressing operation with the proximal phalanx of the fingers and without bending the fingers.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

### BRIEF DESCRIPTION OF THE DRAWINGS

The other objects, features and advantages will occur to those skilled in the art from the following description of the preferred embodiment and the accompanying drawings in which:
FIG.1 illustrates a topside perspective side view of a mouse device, according to one embodiment herein.
FIG.2 illustrates a right side view of a mouse device, according to one embodiment herein.
FIG.3 illustrates a topside view of a mouse device, according to one embodiment herein.
FIG.4 illustrates a bottom side view of a mouse device, according to one embodiment herein.
FIG.5 illustrates a backside view of a mouse device, according to one embodiment herein.
FIG.6 illustrates a front side view of a mouse device, according to one embodiment herein.
FIG.7 illustrates a side view of a switching element in an activated condition to close an electrical circuit in the computer mouse device/switching device, according to an embodiment herein.
FIG.8 illustrates a side view of a switching element in a non- activated condition to open an electrical circuit in the computer mouse device/switching device, according to an embodiment herein.

Although the specific features of the embodiments herein are shown in some drawings and not in others. This is done for convenience only as each feature may be combined with any or all of the other features in accordance with the embodiments herein.

### DETAILED DESCRIPTION OF THE EMBODIMENTS HEREIN

In the following detailed description, a reference is made to the accompanying drawings that form a part hereof, and in which the specific embodiments that may be practiced is shown by way of illustration. These embodiments are described in sufficient detail to enable those skilled in the art to practice the embodiments and it is to be understood that other changes may be made without departing from the scope of the embodiments. The following detailed description is therefore not to be taken in a limiting sense.

The various embodiments herein disclose a switching device/mouse activated by proximal phalanx of a finger. The switching device/mouse is ergonomically designed to prevent carpal-tunnel effect and bending of fingers. The embodiments herein discloses a mouse/ switching device including upper levers/ elongated buttons with an elevated surface so that the user rests his fingers in a relaxed position on the elevated surface. The upper levers/elongated buttons includes elongated and elevated parts that go down when pressed anywhere on the upper levers/elongated buttons. Further, the mouse is back pressed with the proximal phalanx of the fingers without bending the fingers.

According to an embodiment herein, a finger activated mouse device/switching device is provided. The device comprises an enclosure having a top wall, a bottom wall, and a pair of opposing side walls. The upper levers/elongated buttons is pivotally supported on the top wall. The upper levers/ elongated buttons is downwardly displaced from the top wall with a proximal phalanx of the finger. The upper levers/elongated buttons is attached to the top wall through a support arm. A pair of restoring elements are positioned within the enclosure. The pair of restoring elements includes a first restoring element and a second restoring element. The first restoring element and the second restoring element is connected to the upper levers/elongated buttons. The first restoring element and the second restoring element are respectively configured to displace the upper levers back to a home position or rest position after the completion of the displacement operation of the upper levers/elongated buttons. A pair of switching elements are positioned within the enclosure. The pair of switching elements include a first switching element and a second switching element. The first switching element and the second switching element is connected to the upper levers/elongated buttons. The first switching element and the second switching element are respectively activated, when the upper levers/elongated buttons is displaced downwardly. The upper levers/elongated buttons has a top surface to receive fingers of the user during a use condition. The upper levers/elongated buttons is configured to be operated with a proximal phalanx of the fingers.

According to an embodiment herein, the first switching element and the second switching element are respectively deactivated, when the upper levers/elongated buttons is moved to home position or rest position.

According to an embodiment herein, the first switching element and the second switching element are respectively activated to close an electrical circuit.

According to an embodiment herein, the first switching element and the second switching element are respectively deactivated to open an electrical circuit.

According to an embodiment herein, the first switching element and the second switching element are similar or of same type.

According to an embodiment herein, the first switching element and the second switching element are of different types.

According to an embodiment herein, the first rotating element and the second rotating element are springs.

According to an embodiment herein, the first rotating element and the second rotating element are fiber material.

According to an embodiment herein, the device further comprises a platform supported by a spring. The platform is tilted in a first direction to activate the first switching element and the second switching, when the upper lever//elongated button is displaced downwardly. According to an embodiment herein, the platform is connected to the first switching element through a first rod. The platform is connected to the second switching element through a second rod.

According to an embodiment herein, the first switching element is enclosed in a first block mounted within wall of the enclosure, and the second switching element is enclosed in a second block mounted within wall of the enclosure.

According to an embodiment herein, the device further comprises a scroll wheel attached in between the upper levers/elongated buttons.

According to an embodiment herein, the upper levers/elongated buttons are two arms separated by a distance. The two arms includes a first arm and a second arm. The first arm and the second arm are displaced to carry out mutually different operations.

According to an embodiment herein, the upper wall is mounted with an illuminating unit to provide illumination or light during operation.

According to an embodiment herein, a switching device/mouse activated by proximal phalanx of a finger includes an enclosure having a top wall, a bottom wall, and sidewalls. The switching device/mouse includes an upper lever elongated button pivotally supported by the top wall. The upper lever/ elongated button is downwardly displaced from the top wall with a proximal phalanx of the finger. The switching device/mouse includes a pair of restoring elements positioned within the enclosure and coupled to the upper levers/elongated buttons to reposition the upper levers/elongated buttons back to the rest position or home position, when the movement of the upper levers/elongated buttons is completed. Further, the switching device/mouse includes a pair of switching elements wherein the operation of the switching elements is carried out by the displacement of the upper levers/elongated buttons to perform an electrical switching operation. The mouse is held in the grasping grip such that a user's hand is in a positioned over the top wall during a rest position, and the user's finger is positioned on the elevated surface of the upper levers/elongated buttons during an operation of the upper levers/elongated buttons. The upper levers/elongated buttons is operated by back pressing operation with the proximal phalanx of the fingers without bending the fingers.

According to an embodiment herein, the switching device/mouse further includes a platform supported by a pivotable element. When the upper levers/elongated buttons is displaced downwardly, the pivotable element is tilted in a first direction for actuating a first switching element. The restoring elements are any one of springs, and material fibers.

According to an embodiment herein, an ergonomically designed computer mouse device activated by proximal phalanx of a finger includes an enclosure having a top wall, a bottom wall, and sidewalls. The computer mouse includes upper levers/elongated buttons pivotally supported by the top wall. The upper levers/elongated buttons includes an elevated surface continuing to a contoured curve at the edge so that fingers rest in a relaxed position on the elevated surface. The upper level is displaced by pressing the curved edge with the proximal phalanx of the fingers. The computer mouse includes a scroll wheel positioned on the top wall. The mouse is held in the grasping grip such that a user's hand is in a received to rest over the top wall during a non-use condition. The device is operated by back pressing the upper levers/elongated buttons with the proximal phalanx of the fingers without having to bend the fingers.

According to an embodiment herein, a switching device/mouse activated by proximal phalanx of a finger includes an enclosure having a top wall and a bottom wall. The switching device/mouse includes a plurality of upper levers/elongated buttons arranged adjacent to one another. The upper levers/elongated buttons are pivotally supported by the top wall and spaced apart from the top wall during a non-use condition. The upper levers/elongated buttons is downwardly displaced with the proximal phalanx of the finger. The switching device/mouse includes a plurality of restoring elements positioned within the enclosure and coupled to the upper levers/elongated buttons to reposition the upper levers/elongated buttons back to home position or rest position, after the completion of displacement operation of the upper levers/elongated buttons. The restoring elements includes any one of springs of fiber materials. The switching device/mouse includes a plurality of switching elements. The upper levers/elongated buttons is displaced to activate the switching elements to carry out an electrical switching operation. The mouse is held in the grasping condition such that a user's hand is positioned over the top wall during a non-use condition. The user's finger is positioned on the elevated surface of the upper levers/elongated buttons to operate the upper levers/elongated buttons by a back pressing operation with the proximal phalanx of the fingers and without bending the fingers.

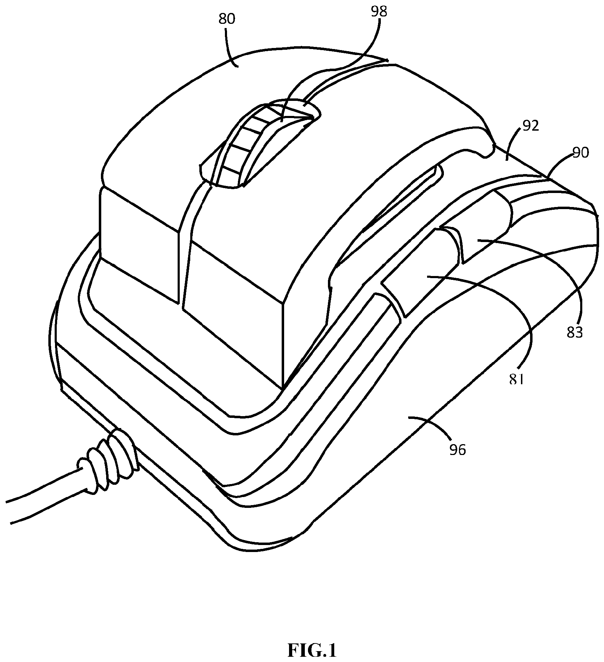

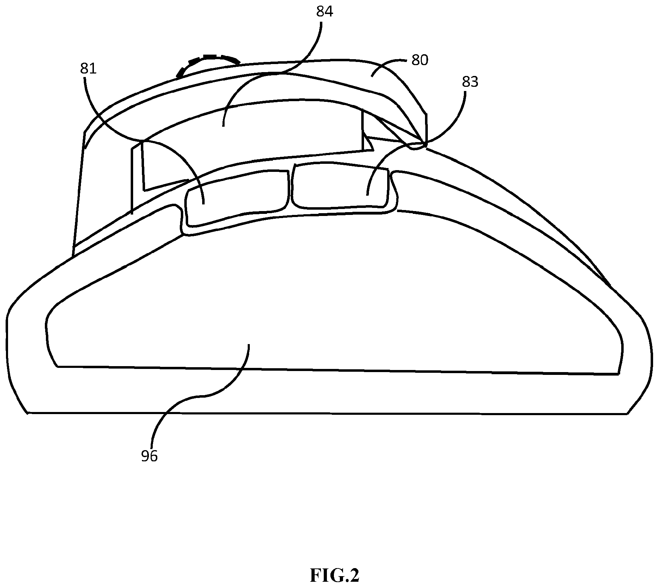

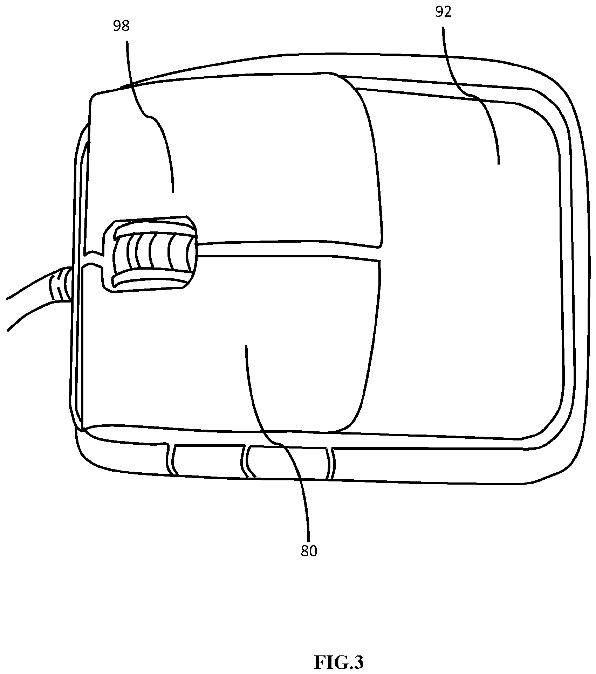

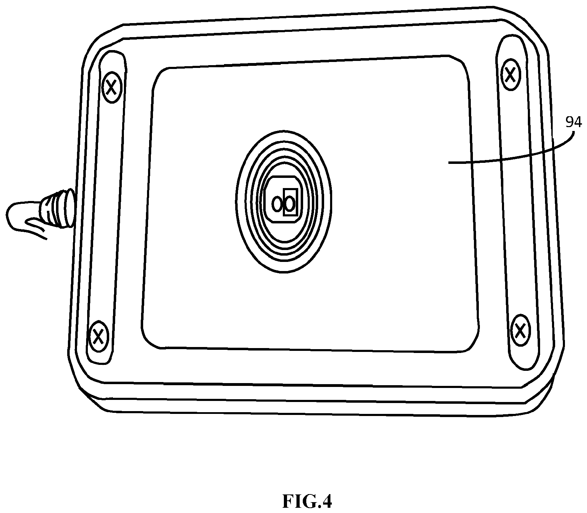

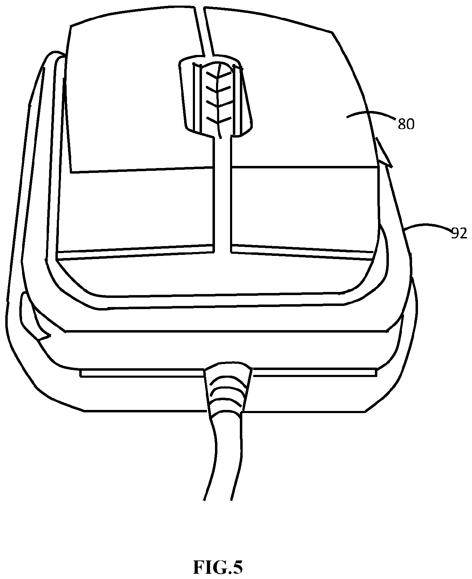

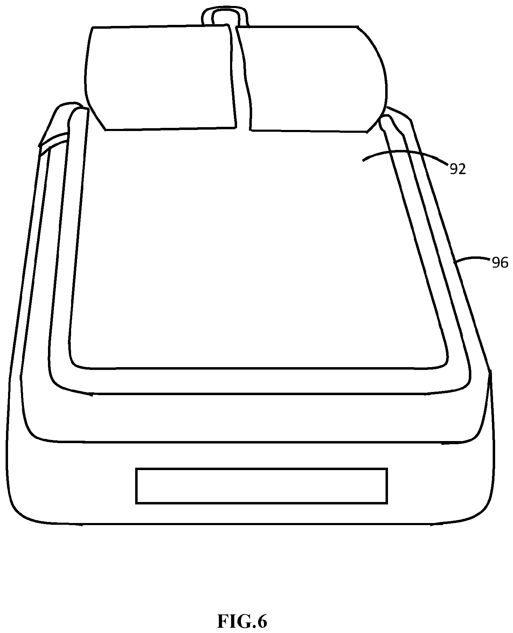

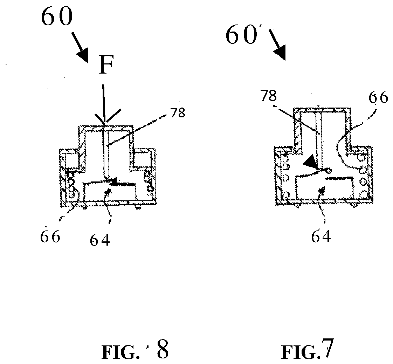

FIG.1 illustrates a topside perspective side view of a mouse device, according to one embodiment herein. FIG.2 illustrates a right side view of a mouse device, according to one embodiment herein. FIG.3 illustrates a topside view of a mouse device, according to one embodiment herein. FIG.4 illustrates a bottom side view of a mouse device, according to one embodiment herein. FIG.5 illustrates a backside view of a mouse device, according to one embodiment herein. FIG.6 illustrates a front side view of a mouse device, according to one embodiment herein. FIG. 7 illustrates a side view of a switching element in an activated condition to close an electrical circuit in the computer mouse device/switching device, according to an embodiment herein. FIG.8 illustrates a side view of a switching element in a non- activated condition to open an electrical circuit in the computer mouse device/switching device, according to an embodiment herein. With respect to FIG. 1-FIG. 8, the ergonomically designed computer mouse 100 comprise an enclosure 70 which may be of molded plastic, for instance, and which further include a top wall 72 and a bottom wall 74. The bottom wall 74 is intended to be rested on and be moved over a supporting surface as is well known in the use of computer mice for computer visual screen operations. The enclosure 90 includes opposing side walls 96 so that walls 92, 94, and 96 form a closed enclosure 90 that is held in the grasping grip such that a user's hand is in a relaxed position over the top wall 92. The computer mouse includes a scroll wheel 98 positioned on the top wall 92.

With respect to FIG. 1 to 8, an upper levers/elongated buttons 80 is supported by the enclosure 90 held by opposing standoffs 84, wherein the standoffs are attached at top wall 92 and extended downwardly therefrom, as shown. The upper levers/elongated buttons 80 is positioned above and separated from the top wall 92 and is displaced by a back press using proximal phalanx of a finger. Thus, the design enables the palm of the user to be in a relaxed position without the need for bending fingers. The computer mouse is ergonomically designed with an elevated front portion and low back portion, thereby enabling the user to position the hand in such a way that the palm rests straight on the top wall 92 of the switching device. Thus, the void of the palm is not filled with elevated portions as compared to other mouse designs. Further, the switching device includes buttons/micro switches '81' and '83' that is used for switching function.

According to an embodiment herein, a switching device/mouse activated by proximal phalanx of a finger includes an enclosure having a top wall and an opposing bottom wall. The switching device/mouse includes a plurality of mutually adjacent upper lever /elongated buttons. The upper levers/elongated buttons is pivotally supported by the top wall, and downwardly separated from the first rest positions. The upper levers/ elongated buttons is downwardly displaced by the proximal phalanx of the finger. The mouse is held in the grasping grip such that a user's hand is in a relaxed position over the top wall, and the user's finger is positioned on the elevated surface of the upper levers/elongated buttons, and operated by back pressing with the proximal phalanx of the fingers without bending the fingers.

With respect to FIG. 7, the first switch 60 is in a non-actuated state whereby the electrical contacts 64 are kept open. As illustrated in FIG.8, the first switch 60 with the electrical contacts 64 are in a closed position when force "F" is applied by pressure of proximal phalanx of the finger to the upper levers/elongated buttons 40. When finger pressure "F" is removed, the electrical contacts 64 is in open position (FIG. 7) as spring 66 is retreated upward to their non-compressed state, thereby resuming the upper levers/elongated buttons 80 to rest position.

According to an embodiment herein, the finger activated switching device (mouse 10) includes two or more sets of levers 80, for switching multiple sets of switching elements 60. A plurality of levers 80 with the same mechanical arrangements for actuating more than two sets of switches 60 is understood by those skilled in the art.

The improved ergonomic mouse/switching device configuration allows the palm of the user to be in a relaxed position without the need of bending fingers. The design feature facilitate the reduction of the load on the entire palm of the user, thereby minimizing the stain and stress of mouse usage. The switching device is ergonomically designed with an elevated front portion and low back portion, thereby enabling the user to position the hand in such a way that the palm rests straight on the top wall of the switching device. Thus, the void of the palm is not filled with elevated portions using the improved ergonomic mouse/switching device configuration, thereby preventing carpal-tunnel. The slope of the levers in the mouse/switching device is shaped to allow, a relaxed rather than an extended posture.

It is also to be understood that the following claims are intended to cover all of the generic and specific features of the embodiments described herein and all the statements of the scope of the embodiments, which as a matter of language might be said to fall there between.

## Claims

1. A finger activated mouse device/switching device comprising:
an enclosure (90) having a top wall (92), a bottom wall (94), and a pair of opposing side walls (96);
first and second upper lever/elongated buttons (80), each of the first and second upper lever/elongated buttons (80) having a rest position;
first and second switching elements positioned within the enclosure (90) and respectively connected to the first and second upper lever/elongated buttons; and
first and second restoring elements positioned within the enclosure (90) and respectively connected to the first and second upper lever/elongated buttons;
wherein downward displacement of the first or second upper lever/elongated button activates the first or second switching element respectively; and wherein the first and second restoring elements are respectively configured to restore the first and second upper lever/elongated buttons to their respective rest positions after completion of a displacement operation;
**characterised in that** each of the first and second upper lever/elongated buttons is pivotally supported on the top wall (92), attached to the top wall (92) by a support arm, and spaced apart from the top wall (92) during a non-use condition;
wherein the upper lever/elongated button (80) provides an el evatedtep surface for supporting a finger of a user and wherein the upper lever/elongated button (80) is configured to be downwardly displaced by a proximal phalanx of the finger.

2. The device according to claim 1, wherein the first switching element and the second switching element are deactivated when the first and second upper levers/elongated buttons, respectively, are moved to the rest position.

3. The device according to claim 1, wherein the first switching element and the second switching element are activated to close a respective electrical circuit.

4. The device according to claim 1, wherein the first switching element and the second switching element are deactivated to open a respective electrical circuit.

5. The device according to claim 1, wherein the first switching element and the second switching element are similar or of same type.

6. The device according to claim 1, wherein the first switching element and the second switching element are of different types.

7. The device according to claim 1, wherein the first restoring element and the second restoring element are springs.

8. The device according to claim 1, wherein the first restoring element and the second restoring element are fiber material.

9. The device according to claim 1, further comprising a platform supported by a spring, and wherein the platform is tilted in a first direction to activate the first switching element, and the platform is tilted in a second direction to activate the second switching element when the first upper lever/elongated button and the second upper lever/elongated button, respectively, are displaced downwardly.

10. The device according to claim 1, wherein the platform is connected to the first switching element through a first rod and wherein the platform is connected to the second switching element through a second rod.

11. The device according to claim 1, wherein the first switching element is enclosed in a first block mounted on the bottom wall of the enclosure, and wherein the second switching element is enclosed in a second block mounted on the bottom wall of the enclosure.

12. The device according to claim 1, further comprising a scroll wheel attached in between the first and second upper levers/elongated buttons.

13. The device according to claim 1, wherein the first and second upper levers/elongated buttons (80) are, respectively, a first arm and a second arm, separated by a distance, and wherein displacement of the first arm and displacement of the second arm each effects a different operation.

14. The device according to claim 1, wherein the top wall (92) is mounted with an illuminating unit to provide illumination or light during operation.

15. The device according to claim 1, further comprising a platform supported by a pivotable element wherein downward movement of the first upper lever/elongated button or the second upper lever/elongated button would actuate the first and second switching element, respectively.

## Patentansprüche

1. Eine fingeraktivierte Mausvorrichtung/Schaltvorrichtung, die Folgendes umfasst:
ein Gehäuse (90) mit einer oberen Wand (92), einer unteren Wand (94) und einem Paar von gegenüberliegenden Seitenwänden (96);
einen ersten und einen zweiten oberen Hebel bzw. verlängerte Tasten (80), wobei der erste und der zweite obere Hebel bzw. die verlängerten Tasten (80) jeweils eine Ruheposition haben;
ein erstes und ein zweites Schaltelement, die innerhalb des Gehäuses (90) angeordnet und jeweils mit dem ersten und dem zweiten oberen Hebel bzw. den verlängerten Tasten verbunden sind; und
ein erstes und ein zweites Rückstellelement, die sich innerhalb des Gehäuses (90) befinden und jeweils mit dem ersten und dem zweiten oberen Hebel bzw. den verlängerten Tasten verbunden sind;
wobei eine Abwärtsverschiebung des ersten oder des zweiten oberen Hebels bzw. der verlängerten Taste das erste bzw. das zweite Schaltelement aktiviert; und wobei das erste und das zweite Rückstellelement so konfiguriert sind, dass sie den ersten und den zweiten oberen Hebel bzw. den verlängerten Tasten nach Abschluss eines Verschiebungsvorgangs in ihre jeweiligen Ruhepositionen zurückbringen;
**dadurch gekennzeichnet, dass** jeder der ersten und zweiten oberen Hebel bzw. der verlängerten Tasten schwenkbar an der oberen Wand (92) gelagert ist, durch einen Stützarm an der oberen Wand (92) befestigt ist und während eines Nichtgebrauchszustandes von der oberen Wand (92) beabstandet ist;
wobei der obere Hebel bzw. die verlängerte Taste (80) eine erhöhte Oberfläche zum Stützen eines Fingers eines Benutzers bereitstellt und wobei der obere Hebel bzw. die verlängerte Taste (80) so konfiguriert ist, dass er durch eine proximale Phalanx des Fingers nach unten verschoben wird.

2. Vorrichtung nach Anspruch 1, wobei das erste Schaltelement und das zweite Schaltelement deaktiviert sind, wenn der erste bzw. der zweite obere Hebel bzw. die verlängerten Tasten in die Ruheposition bewegt werden.

3. Vorrichtung nach Anspruch 1, wobei das erste Schaltelement und das zweite Schaltelement aktiviert werden, um einen jeweiligen Stromkreis zu schließen.

4. Vorrichtung nach Anspruch 1, wobei das erste Schaltelement und das zweite Schaltelement deaktiviert sind, um einen jeweiligen Stromkreis zu öffnen.

5. Vorrichtung nach Anspruch 1, wobei das erste Schaltelement und das zweite Schaltelement ähnlich oder gleichartig sind.

6. Vorrichtung nach Anspruch 1, wobei das erste Schaltelement und das zweite Schaltelement von unterschiedlichem Typ sind.

7. Vorrichtung nach Anspruch 1, wobei das erste Rückstellelement und das zweite Rückstellelement Federn sind.

8. Vorrichtung nach Anspruch 1, wobei das erste Rückstellelement und das zweite Rückstellelement aus Fasermaterial bestehen.

9. Vorrichtung nach Anspruch 1, die ferner eine Plattform umfasst, die von einer Feder getragen wird, und wobei die Plattform in eine erste Richtung gekippt wird, um das erste Schaltelement zu aktivieren, und die Plattform in eine zweite Richtung gekippt wird, um das zweite Schaltelement zu aktivieren, wenn der erste obere Hebel bzw. die verlängerte Taste und der zweite obere Hebel bzw. die verlängerte Taste nach unten verschoben wird.

10. Vorrichtung nach Anspruch 1, wobei die Plattform über eine erste Stange mit dem ersten Schaltelement verbunden ist und wobei die Plattform über eine zweite Stange mit dem zweiten Schaltelement verbunden ist.

11. Vorrichtung nach Anspruch 1, wobei das erste Schaltelement in einem ersten Block eingeschlossen ist, der an der Bodenwand des Gehäuses angebracht ist, und wobei das zweite Schaltelement in einem zweiten Block eingeschlossen ist, der an der Bodenwand des Gehäuses angebracht ist.

12. Vorrichtung nach Anspruch 1, die ferner ein Scrollrad umfasst, das zwischen dem ersten und dem zweiten oberen Hebel bzw. den verlängerten Tasten angebracht ist.

13. Vorrichtung nach Anspruch 1, wobei der erste und der zweite obere Hebel bzw. die verlängerten Tasten (80) jeweils ein erster Arm und ein zweiter Arm sind, die durch einen Abstand voneinander getrennt sind, und wobei die Verschiebung des ersten Arms und die Verschiebung des zweiten Arms jeweils eine andere Funktion bewirken.

14. Vorrichtung nach Anspruch 1, bei der die obere Wand (92) mit einer Beleuchtungseinheit versehen ist, um während des Betriebs für Beleuchtung oder Licht zu sorgen.

15. Vorrichtung nach Anspruch 1, die ferner eine Plattform umfasst, die von einem schwenkbaren Element getragen wird, wobei eine Abwärtsbewegung des ersten oberen Hebels bzw. der verlängerten Taste oder des zweiten oberen Hebels bzw. der verlängerten Taste das erste bzw. zweite Schaltelement betätigen würde.

## Revendications

1. Souris/dispositif de commutation actionné par un doigt comportant :
un boîtier (90) comprenant une paroi supérieure (92), une paroi inférieure (94) et deux parois latérales opposées (96) ;
deux boutons/commutateurs supérieurs allongés (80), avec chacun une position de repos ;
deux éléments de commutation positionnés à l'intérieur du boîtier (90) et reliés, respectivement, au premier et au deuxième bouton/commutateur allongés supérieurs ; et
deux éléments de rappel positionnés à l'intérieur du boîtier (90) et reliés, respectivement, au premier et au deuxième bouton/commutateur allongés supérieurs ;
le déplacement vers le bas du premier ou du deuxième commutateur/bouton allongé actionne le premier ou le deuxième élément de commutation, respectivement ; le premier et le deuxième éléments de rappel sont conçus, respectivement, pour ramener le premier et le deuxième commutateurs/boutons allongés supérieurs en position de repos après un déplacement ;
**caractérisé en ce que** chacun des premier et deuxième commutateurs/boutons allongés supérieurs reposent sur un pivot de la paroi supérieure (92), sont fixés sur la paroi supérieure (92) par un bras de support et espacés de la paroi supérieure (92) lorsqu'ils sont inutilisés ;
le commutateur/bouton allongé supérieur (80) est doté d'une surface surélevée de manière à pouvoir accueillir le doigt d'un utilisateur ; le commutateur/bouton allongé supérieur (80) est conçu pour être déplacé vers le bas par une phalange proximale du doigt.

2. Dispositif selon la revendication 1, dont le premier et le deuxième élément de commutation sont désactivés lorsque le premier et le deuxième commutateurs/boutons allongés, respectivement, sont replacés en position de repos.

3. Dispositif selon la revendication 1, dont le premier et le deuxième élément de commutation sont actionnés pour fermer un circuit électrique respectif.

4. Dispositif selon la revendication 1, dont le premier et le deuxième élément de commutation sont désactivés pour couper un circuit électrique respectif.

5. Dispositif selon la revendication 1, dont le premier et le deuxième élément de commutation sont similaires ou de même type.

6. Dispositif selon la revendication 1, dont le premier et le deuxième élément de commutation sont de types différents.

7. Dispositif selon la revendication 1, dont le premier et le deuxième élément de rappel sont des ressorts.

8. Dispositif selon la revendication 1, dont le premier et le deuxième élément de rappel sont constitués d'un matériau fibreux.

9. Dispositif selon la revendication 1, comprenant en outre une plate-forme supportée par un ressort, inclinée dans une première direction pour actionner le premier élément de commutation, et inclinée dans une deuxième direction pour actionner le deuxième élément de commutation lorsque le premier et le deuxième commutateurs/boutons allongés, respectivement, sont déplacés vers le bas.

10. Dispositif selon la revendication 1, dont la plate-forme est reliée au premier élément de commutation par une première tige et au deuxième élément de commutation par une deuxième tige.

11. Dispositif selon la revendication 1, dont le premier élément de commutation est enfermé dans un premier bloc monté sur la paroi inférieure du boîtier, et dont le deuxième élément de commutation est enfermé dans un deuxième bloc monté sur la paroi inférieure du boîtier.

12. Dispositif selon la revendication 1, comprenant en outre une molette de défilement fixée entre le premier et le deuxième commutateurs/boutons allongés.

13. Dispositif selon la revendication 1, dont le premier et le deuxième commutateurs/boutons allongés (80) sont, respectivement, un premier bras et un deuxième bras, séparés par une distance donnée, et dans lequel les déplacements du premier et du deuxième bras constituent deux opérations distinctes.

14. Dispositif selon la revendication 1, dont la paroi supérieure (92) est montée avec une unité d'éclairage pour fournir un éclairage ou une lumière pendant le fonctionnement.

15. Dispositif selon la revendication 1, comprenant également une plate-forme reposant sur un pivot, dans lequel le mouvement vers le bas du premier ou du deuxième commutateur/bouton allongé actionne le premier et le deuxième élément de commutation, respectivement.
